# EUROPÄISCHE PATENTSCHRIFT

(11) **EP 2 880 389 B1**
(45) Veröffentlichungstag und Bekanntmachung des Hinweises auf die Patenterteilung: **20.02.2019**
(21) Anmeldenummer: 13729684.4
(22) Anmeldetag: 12.06.2013
(51) Int. Cl.: F27B 3/24, F27D 19/00, F27D 21/04

(54) **VERFAHREN UND VORRICHTUNG ZUM DETEKTIEREN EINER LECKAGE IM BEREICH MINDESTENS EINER KÜHLVORRICHTUNG EINES OFENS, SOWIE EIN OFEN**
METHOD AND DEVICE FOR DETECTING A LEAK IN THE AREA OF AT LEAST ONE COOLING DEVICE OF A FURNACE, AND A FURNACE
PROCÉDÉ ET DISPOSITIF DESTINÉS À DÉTECTER UNE FUITE DANS LA ZONE D'AU MOINS UN DISPOSITIF DE REFROIDISSEMENT D'UN FOUR, AINSI QU'UN FOUR

(30) Priorität: 01.08.2012 EP 12178854
(43) Veröffentlichungstag der Anmeldung: 10.06.2015
(73) Patentinhaber: Primetals Technologies Austria GmbH, 4031 Linz (AT)
(72) Erfinder: VAILLANCOURT, Denis A., Canonsburg, Pennsylvania 15317 (US); ABEL, Markus, 77694 Kehl-Bodersweier (DE); DORNDORF, Markus, 76534 Baden-Baden (DE); TRATNIG, Mark, A-9173 St. Margareten (AT)
(74) Vertreter: Metals@Linz
(86) Internationale Anmeldenummer: PCT/EP2013/062146
(87) Internationale Veröffentlichungsnummer: WO 2014/019753

(56) Entgegenhaltungen:
- DE-A1- 3 048 025
- DE-B3-102004 058 520
- US-A- 5 344 122

## Beschreibung

Die Erfindung betrifft ein Verfahren zum Detektieren einer Leckage im Bereich mindestens einer Kühlvorrichtung eines Ofens, insbesondere Elektrolichtbogenofens, wobei im Falle einer Leckage Kühlmittel aus der mindestens einen Kühlvorrichtung in einen Ofenraum des Ofens gelangt, und wobei aus dem Ofenraum über einen Zeitraum Z ein Abgasstrom abgeführt wird. Die Erfindung betrifft weiterhin eine Vorrichtung zur Durchführung des Verfahrens sowie einen Ofen mit einer derartigen Vorrichtung.

Um die Feuerfestauskleidung eines Ofens vor übermäßiger thermischer Belastung zu schützen, wird für die Wandung des Ofens häufig eine Kühlung vorgesehen. Bei Elektrolichtbogenöfen werden sogenannte Kühlpaneele in die Ofenwandung eingebaut, die von einem flüssigen Kühlmittel, häufig in Form von Wasser, durchströmt werden.

Die DE 30 48 025 A1 beschreibt eine derartige Kühlvorrichtung für einen Elektrolichtbogenofen. Die Kühlvorrichtungen sind in Kontakt zum Ofenraum angeordnet und dadurch selbst einer hohen mechanischen und thermischen Belastung ausgesetzt. So kommt es im Bereich der Kühlvorrichtungen immer wieder zu Rissbildung bzw. Leckagen, die zu einem Eintritt von flüssigem Kühlmittel in den heißen Ofenraum führen. Ein solcher Kühlmitteleintritt in den heißen Ofenraum ist gefährlich, da das Kühlmittel schlagartig verdampft. Je nach Größe der Leckage kann es zu einer regelrechten Explosion kommen, die große Schäden am Ofen hervorrufen kann und weiterhin das Leben des Bedienpersonals am Ofen gefährden kann.

Es hat sich gezeigt, dass Leckagen an Kühlvorrichtungen anfangs meist gering sind und relativ wenig Kühlmittel in den Ofenraum eintritt. Die sich bildenden feinen Risse, durch die das Kühlmittel austreten kann, werden allerdings aufgrund der hohen mechanischen und thermischen Belastung der Kühlvorrichtung schnell größer.

Je früher also eine Leckage im Bereich der Kühlvorrichtung eines Ofens erkannt wird, desto schneller kann einer drohenden Explosion entgegengewirkt und Schäden am Ofen sowie eine Beeinträchtigung von Leib und Leben des Bedienpersonals verhindert werden. Bereits existierende Systeme zur Früherkennung von Leckagen an Kühlvorrichtungen von Öfen erfüllen nicht die Anforderungen, die das sicherheitsrelevante Thema stellt, da die Genauigkeit und Eindeutigkeit der bestehenden Messmethoden nicht ausreicht.

So wurde bereits versucht, eine Aussage über Leckagen zu erhalten, indem eine Differenzmessung des Kühlmitteldrucks an unterschiedlichen Kühlvorrichtungen eines Ofens durchgeführt wurde. Eine Leckage führt zu einem Verlust an Kühlmittel in einer Kühlvorrichtung und damit zu einem Druckverlust in der betroffenen Kühlvorrichtung. Aufgrund der meist großen Kühlmittelmengen pro Kühlvorrichtung und des üblicherweise weit verzweigten Zu- und Ableitungssystems hat sich diese Methode jedoch als zu langsam und ungenau erwiesen, um Leckagen zu detektieren.

Bei einem Einsatz von Wasser als Kühlmittel, was häufig der Fall ist, werden auch bereits Messsysteme eingesetzt, die den Wasserstoffgehalt im Abgasstrom des Ofens erfassen und aus diesem Wert auf die im Abgas enthaltene Menge an Wasser rückrechnen. Nachdem in den Ofenraum eintretendes Wasser nicht immer in Wasserstoff und Sauerstoff zersetzt wird, sondern Wasserdampf im Abgasstrom enthalten sein kann, und weiterhin üblicherweise Verbrennungsvorgänge stattfinden, bei denen Kohlendioxid und Wasser gebildet werden und wobei das entstehende Wasser unter Bildung von Wasserstoff dissoziiert, ist auch diese Methode nicht aussagekräftig genug, um Leckagen zuverlässig zu detektieren.

Die US 7,223,978 B2 beschreibt ein generelles Verfahren zur Bestimmung der Gehalte an chemischen Bestandteilen in einem heißen Gas, insbesondere eines Elektrolichtbogenofens, wobei die Bestimmung des Kohlendioxid-, Kohlenmonoxid-, Sauerstoff- oder Wassergehalts mittels einer Laserdiode erfolgt. Die DE 10 2004 058 520 B3 beschreibt die Kondensatmengenbestimmung im Abgas einer Feuerungsanlage. Es ist Aufgabe der Erfindung ein verlässliches Verfahren zum Detektieren einer Leckage im Bereich mindestens einer Kühlvorrichtung eines Ofens bereitzustellen und eine Vorrichtung zur Durchführung eines solchen Verfahrens bereitzustellen. Weiterhin soll ein Ofen mit einer derartigen Vorrichtung bereitgestellt werden.
Die Aufgabe wird für das Verfahren zum Detektieren einer Leckage im Bereich mindestens einer Kühlvorrichtung eines Ofens, wobei im Falle einer Leckage flüssiges, insbesondere wässriges, Kühlmittel aus der mindestens einen Kühlvorrichtung in einen Ofenraum des Ofens gelangt, und wobei aus dem Ofenraum über einen Zeitraum Z ein Abgasstrom abgeführt wird, mit folgenden Schritten gelöst:
- Abtrennen eines repräsentativen Teilstroms vom Abgasstrom während des Zeitraums Z;
- Kondensieren von im Teilstrom enthaltenen dampfförmigen Bestandteilen und Bestimmen eines erhaltenen Kondensatstroms;
- Vergleichen des erhaltenen Kondensatstroms mit einem Kondensatstrom-Grenzwert, und
- Anzeige einer Leckage, wenn der Kondensatstrom den Kondensatstrom-Grenzwert überschreitet.
Es hat sich gezeigt, dass beim Auftreten einer Leckage im Bereich einer oder mehrer Kühlvorrichtungen der Kondensatstrom merklich ansteigt und gegen einen Kondensatstrom-Grenzwert, der auf Basis eines Normalbetriebs des Ofens ohne Leckage vorab ermittelt wird, verglichen werden kann. Überschreitet der Kondensatstrom den Kondensatstrom-Grenzwert, wird auf eine Leckage rückgeschlossen, so dass entsprechende Gegenmaßnahmen eingeleitet werden können. Dabei kann eine Drosselung der Kühlmittelzufuhr zu einer oder mehreren Kühlvorrichtungen, ein Herunterfahren des Ofens sowie eine Reparatur oder ein Austausch der beschädigten Kühlvorrichtung(en) erfolgen. Auch eine schnelle Evakuierung des Bedienpersonals aus dem Gefahrenbereich um den Ofen kann erfolgen, solange eine akute Explosionsgefahr besteht. Das Verfahren ist zur zuverlässigen Detektion von Leckagen an Kühlvorrichtungen geeignet.

Als Messmethode zur Bestimmung der auftretenden Kondensatmenge während des Zeitraums Z ist beispielsweise eine Durchflussmessung geeignet, die einen Volumen- oder Massendurchfluss an Kondensat ermittelt. Besonders bevorzugt ist hier der Einsatz von Durchflusssensoren in Form von Ultraschallströmungsmessern, Flügelradanemometern, Ovalradzählern, usw.. Auch ein heizaktiver, eine Temperaturmessung durchführender Massendurchflussmesser hat sich bewährt, bei welchem ein sich ändernder Massendurchfluss über eine sich ändernde Medientemperatur errechnet wird.

Der Zeitraum Z, in dem der Abgasstrom aus dem Ofenraum abgeführt wird, kann sowohl eine Aufheizphase bis zum Erreichen einer Ofenbetriebstemperatur, eine Haltephase bei Ofenbetriebstemperatur sowie eine Abkühlphase umfassen. Während des Zeitraums Z kann eine kontinuierliche Durchflussmessung oder auch eine diskontinuierliche Durchflussmessung erfolgen. Bei einem Elektrolichtbogenofen wird der Kondensatstrom vorzugsweise während der Prozesszeit, in der die Elektroden mit Strom gespeist werden (sogenannte "Power-ON"-Zeit), und/oder in den Nebenzeiten (sogenannte "Power-OFF"-Zeit), in denen keine Stromzufuhr zu den Elektroden erfolgt, bestimmt.

Allerdings ist bei einem diskontinuierlichen Messverfahren auf eine ausreichende Messhäufigkeit zu achten, damit ein schnell wachsendes Leck nicht übersehen wird. Besonders bevorzugt ist daher im Hinblick auf den Sicherheitsaspekt eine kontinuierliche Messung des Kondensatstroms.

Es hat sich gezeigt, dass sich die Genauigkeit des Verfahrens noch steigern lässt, wenn eine permanente Korrektur des Kondensatstrom-Grenzwerts auf Basis aktueller Daten des Ofenbetriebs erfolgt. So beeinflussen unter anderem die aktuelle Umgebungsluftfeuchte und der Volumenstrom an im Ofen verbranntem Brennstoff, sofern dieser in Form von Wasserstoff und/oder Kohlenwasserstoff(en) vorliegt, die Menge an anfallendem Kondensat.

So hat es sich als vorteilhaft erwiesen, wenn der Kondensatstrom-Grenzwert in Abhängigkeit einer Umgebungsluftfeuchte und/oder eines Volumenstroms an im Ofen verbrannten Brennstoff in Form von Wasserstoff und/oder Kohlenwasserstoff(en) gewählt wird.

Im Falle, dass der Ofen ein Elektrolichtbogenofen ist, in dessen Ofenraum mindestens eine Elektrode geführt ist, deren Oberfläche zur Kühlung mit einem flüssigen, insbesondere wässrigen, Kühlmedium beaufschlagt wird, beeinflusst auch die Menge an zugeführtem Kühlmedium die Menge an anfallendem Kondensat. Es hat sich hier bewährt, wenn der Kondensatstrom-Grenzwert in Abhängigkeit eines zur Kühlung der mindestens einen Elektrode zugeführten Kühlmediumaufgabestroms an flüssigem Kühlmedium im Zeitraum Z gewählt wird.

Als Kühlmittel und/oder Kühlmedium wird hier bevorzugt ein wässriges Medium eingesetzt, insbesondere Wasser verwendet. Dem Wasser können chemische Stoffe beigemischt sein, die beispielsweise eine Algenbildung, eine bakterielle Belastung, eine Sedimentation von Schlamm oder ein Auskristallisieren von schwerlöslichen Salzen verhindern bzw. eindämmen oder eine Oberflächenspannung des Wassers herabsetzen usw.. Prinzipiell kann das erfindungsgemäße Verfahren aber für jedes verdampfende und kondensierende Kühlmittel eingesetzt werden, das bei einem Einbruch in den Ofenraum zu Schäden am Ofen oder einer Beeinträchtigung des Bedienpersonals führt.

Weiterhin hat es sich gezeigt, dass auch eine Feuchte des im Ofenraum zu behandelnden Gutes einen Einfluss auf die Menge an anfallendem Kondensat besitzt. Wird beispielsweise Schrott in einen Elektrolichtbogenofen eingebracht, der zuvor der Witterung bzw. Regen ausgesetzt war, so ist der beim Erhitzen des Schrotts entstehende zusätzliche Wasserdampf bei der Berechnung des Kondensatstrom-Grenzwerts zu berücksichtigen.

Es hat sich demnach bewährt, wenn der Kondensatstrom-Grenzwert in Abhängigkeit einer Feuchte eines im Zeitraum Z im Ofenraum zu behandelnden Gutes gewählt wird.

Eine detektierte Leckage in der Kühlvorrichtung wird vorzugsweise über ein akustisches und/oder optisches Warnsignal angezeigt. So kann das Bedienpersonal schnell informiert und gewarnt werden sowie sofortige Gegenmaßnahmen zur Beseitigung der Leckage eingeleitet werden.

Die Aufgabe wird für die Vorrichtung zur Durchführung eines erfindungsgemäßen Verfahrens gelöst, indem diese umfasst:
- mindestens eine Kondensiereinrichtung zum Kondensieren von im Teilstrom enthaltenen dampfförmigen Bestandteilen;
- mindestens eine Messeinrichtung zum Bestimmen des erhaltenen Kondensatstroms;
- mindestens eine Recheneinheit zum Vergleichen des erhaltenen Kondensatstroms mit einem Kondensatstrom-Grenzwert, und
- mindestens eine Anzeigeeinheit zur Anzeige einer Leckage, sobald der Kondensatstrom den Kondensatstrom-Grenzwert überschreitet.

Die erfindungsgemäße Vorrichtung ist einfach, kostengünstig und erfüllt die Anforderungen an Zuverlässigkeit und Genauigkeit der Messungen.

Als Kondensiereinrichtung wird insbesondere ein Gaskühler eingesetzt, um die Temperatur des Teilstroms soweit abzukühlen, dass eine Kondensation der enthaltenen dampfförmigen Bestandteile, umfassend ggf. Kühlmittel und ggf. weiterhin Kühlmedium, erfolgt.

Als Messeinrichtung zur Bestimmung des erhaltenen Kondensatstroms haben sich unter anderem die bereits oben erwähnten Durchflusssensoren bewährt.

Zur Messung der Umgebungsluftfeuchte umfasst die Vorrichtung weiterhin bevorzugt mindestens eine erste Einrichtung, welche mit der mindestens einen Recheneinheit datentechnisch verbunden ist.

Zur Erfassung des dem Ofen zur Verbrennung zugeführten Volumenstroms an Brennstoff (in Form von Wasserstoff und/oder Kohlenwasserstoff(en)) umfasst die Vorrichtung bevorzugt weiterhin mindestens eine zweite Einrichtung, welche mit der mindestens einen Recheneinheit datentechnisch verbunden ist.

Zur Erfassung der Feuchte des im Zeitraum Z im Ofenraum zu behandelnden Gutes umfasst die Vorrichtung bevorzugt weiterhin mindestens eine dritte Einrichtung, welche datentechnisch mit der mindestens einen Recheneinheit verbunden ist.

Zur Erfassung eines Kühlmediumaufgabestroms an flüssigem Kühlmedium zur Kühlung der mindestens einen Elektrode im Zeitraum Z umfasst die Vorrichtung bevorzugt weiterhin mindestens eine vierte Einrichtung, welche datentechnisch mit der mindestens einen Recheneinheit verbunden ist.

Unter einer "datentechnischen" Verbindung mit der mindestens einen Recheneinheit wird das Vorhandensein einer drahtgebundene oder drahtlosen Datenleitung zwischen der jeweiligen Einrichtung und Recheneinheit verstanden.

Auch ein die mindestens eine Kühlvorrichtung durchströmender Kühlmittel-Volumenstrom wird optional erfasst und berücksichtigt. Wird in Folge einer Erhöhung oder Erniedrigung des Kühlmittel-Volumenstroms auch eine Erhöhung oder Verringerung des Kondensatstroms gemessen, so kann auf Basis der sich einstellenden Änderung des Kondensatstroms hier unmittelbar auf die Größe einer vorhandenen Leckage rückgeschlossen werden.

In der Recheneinheit erfolgt eine Korrektur des Kondensatstrom-Grenzwerts aus Basis der erfassten Werte für die Umgebungsluftfeuchte und/oder den Volumenstroms an dem Ofen zugeführtem Brennstoff und/oder die Feuchte des im Ofenraum zu behandelnden Gutes und/oder die Menge des einer Elektrode zugeführten Kühlmediums. Eine derartige Online-Korrektur des Kondensatstrom-Grenzwerts ermöglicht eine hochpräzise Detektion des Auftritts einer Leckage mit äußerst geringer Ansprechzeit.

In der Recheneinheit ist dazu ein Standard-Wert für den Kondensatstrom-Grenzwert KSG hinterlegt, der insbesondere auf Basis von Messwerten für den im Ofenraum verbrannten Brennstoff-Volumenstrom und/oder die Umgebungsfeuchte und/oder die Feuchte des im Ofenraum zu behandelnden Gutes und/oder sonstigen in den Ofenraum einzubringenden Kühlmedien, z.B. zur oberflächlichen Kühlung von Elektroden, korrigiert wird.

Daraus wird ein aktuell zu erwartender Langzeit-Durchschnittswert des zu erwartenden Kondensatstroms KS und dessen Standardabweichung errechnet, und auf dieser Basis der aktuelle Kondensatstrom-Grenzwert festgelegt. Der gemessene Kondensatstrom KS wird einer Mittelwertbildung unterzogen, um einen Kurzzeit-Durchschnittswert zu bilden. Der Kurzzeit-Durchschnittswert des gemessenen Kondensatstroms KS wird nun mit dem aktuellen Kondensatstrom-Grenzwert verglichen. Auch ein die mindestens eine Kühlvorrichtung durchströmender Kühlmittel-Volumenstrom wird optional erfasst und dabei berücksichtigt. Bei einer Überschreitung des aktuellen Kondensatstrom-Grenzwerts durch den Kurzzeit-Durchschnittswert wird auf eine Leckage im Bereich der mindestens einen Kühlvorrichtung rückgeschlossen und entsprechende Gegenmaßnahmen eingeleitet sowie ein Warnsignal ausgegeben.

Am Ende einer Ofenreise, beispielsweise eines jeden Einschmelzzyklus, bei der keine Leckage aufgetreten ist, wird der Standard-Wert für den Kondensatstrom-Grenzwert auf Basis der über die letzten Ofenreisen ermittelten Kondensatstrom-Grenzwerte korrigiert und in der Recheneinheit neu hinterlegt.

Die Aufgabe wird für den Ofen gelöst, indem dieser einen Ofenraum, mindestens einer Kühlvorrichtung, die in Kontakt zum Ofenraum angeordnet ist, mindestens eine Abgasabführleitung zur Abführung eines Abgasstroms aus dem Ofenraum , mindestens eine von der Abgasabführleitung abzweigende Teilstrom-Abführleitung, sowie mindestens eine erfindungsgemäße Vorrichtung aufweist, deren mindestens eine Kondensiereinrichtung mit der Teilstrom-Abführleitung verbunden ist.

Ein derartiger Ofen ist aufgrund der schnellen und zuverlässigen Möglichkeit zur Detektion des Auftritts einer Leckage an einer Kühlvorrichtung besonders sicher betreibbar.

Bei dem Ofen handelt es sich insbesondere um einen Elektrolichtbogenofen.

Der Ofen umfasst insbesondere ein Ofengefäß und einen Ofendeckel, die den Ofenraum ausbilden, sowie mindestens eine in den Ofenraum einbringbare Elektrode. Diese wird üblicherweise durch den Ofendeckel in den Ofenraum geführt. Kühlvorrichtungen, die von Leckagen betroffen sein können, befinden sich dabei üblicherweise in der Ofenwand oder an der Innenseite des Ofendeckels in Kontakt zum Ofenraum.

In der Teilstrom-Abführleitung kann vor der mindestens einen Kondensiereinrichtung mindestens eine herkömmliche und unabhängige Abgasanalyseeinheit zur Bestimmung der Zusammensetzung des Abgases, beispielsweise im Hinblick auf Kohlendioxid, Kohlenmonoxid, Wasserstoff, Sauerstoff usw., angeordnet sein. Eine Abgasanalyseeinheit kann alternativ auch zwischen der Teilstrom-Abführleitung und der mindestens einen Kondensiereinrichtung eingefügt sein, wobei der komplette Teilstrom die Abgasanalyseeinheit durchläuft und erst in Folge der mindestens einen Kondensiereinrichtung zugeführt wird.

In einer bevorzugten Ausgestaltung des Ofens weist dieser je Elektrode mindestens eine Kühlmediumauftragsanordnung zur Beaufschlagung einer Oberfläche der Elektrode mit flüssigem Kühlmedium auf. Dabei ist mindestens ein Regelungsventil vorhanden, dessen Einstellung die Menge an zugeführtem Kühlmittel regelt und die insbesondere gleichzeitig eine vierte Einrichtung der Vorrichtung bildet.

Das erfindungsgemäße Verfahren und die erfindungsgemäße Vorrichtung sind für alle Arten von Öfen einsetzbar, bei denen ein unerwünschter Kühlmitteleinbruch in den heißen Ofenraum möglich ist.

Die Figuren 1 bis 3 sollen erfindungsgemäße Lösungen beispielhaft erläutern. So zeigt:
- FIG 1: einen Ofen mit einer ersten erfindungsgemäßen Vorrichtung;
- FIG 2: einen Ofen mit einer zweiten erfindungsgemäßen Vorrichtung; und
- FIG 3: einen Ofen mit einer zweiten erfindungsgemäßen Vorrichtung und einer Abgasanalyseeinheit.

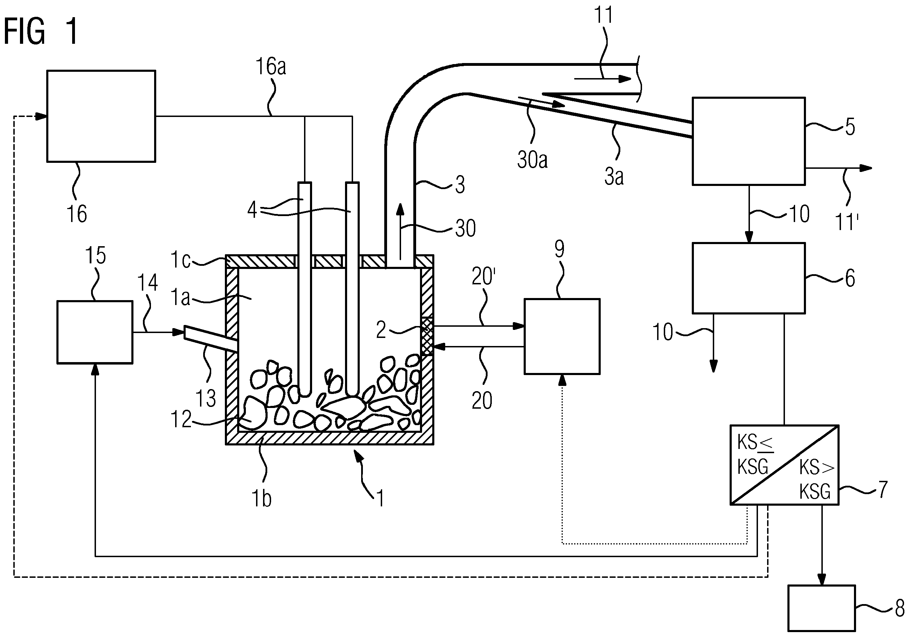

FIG 1 zeigt einen Ofen 1 mit einer ersten erfindungsgemäßen Vorrichtung. Der Ofen 1 ist hier ein Elektrolichtbogenofen zum Aufschmelzen eines Gutes 12 in Form von Schrott. Er umfasst ein Ofengefäß 1b und einen Ofendeckel 1c, die zusammen einen Ofenraum 1a ausbilden, eine Kühlvorrichtung 2 in einer Wandung des Ofengefäßes 1b, die in Kontakt zum Ofenraum 1a angeordnet ist, eine Abgasabführleitung 3 zur Abführung eines Abgasstroms 30 aus dem Ofenraum 1a, eine von der Abgasabführleitung 3 abzweigende Teilstrom-Abführleitung 3a, sowie in den Ofenraum 1a einbringbare Elektroden 4. Durch die Wandung des Ofengefäßes 1b ist eine Brennereinheit 13 geführt, die über eine Brennstoffzufuhreinheit 15 mit Brennstoff 14, hier in Form von Erdgas, versorgt wird. Der Brennstoff 14 wird in der Brennereinheit 13 unter Zuführung von Luft oder Sauerstoff (welche der Übersichtlichkeit halber nicht dargestellt ist) verbrannt. Die Elektroden 4 sind über Stromzuführungen 16a mit einer Stromversorgungseinheit 16 verbunden. Die Kühlvorrichtung 2 wird durch eine Kühlmittelversorgungseinheit 9 mit flüssigem Kühlmittel 20 in Form von Wasser versorgt, das durch die Kühlvorrichtung 2 zu deren Kühlung hindurch geleitet und in erwärmtem Zustand als erhitztes Kühlmittel 20' wieder ausgeleitet wird.

Die erste Vorrichtung umfasst eine Kondensiereinrichtung 5 zum Kondensieren von im Teilstrom 30a enthaltenen dampfförmigen Bestandteilen, eine Messeinrichtung 6 zum Bestimmen des erhaltenen Kondensatstroms 10, eine Recheneinheit 7 zum Vergleichen des erhaltenen Kondensatstroms (KS) 10 mit einem Kondensatstrom-Grenzwert (KSG), und eine Anzeigeeinheit 8 zur Anzeige einer Leckage, sobald der Kondensatstrom 10 den Kondensatstrom-Grenzwert überschreitet.

Die Kondensiereinrichtung 5 ist mit der Teilstrom-Abführleitung 3a verbunden, so dass der Teilstrom 30a in die Kondensiereinrichtung 5 geführt wird. Der Abgasreststrom 11 und ein nach Kondensation der dampfförmigen Bestandteile in der Kondensiereinrichtung 5 übrigbleibende Teil-Restgasstrom 11' können optional wieder zusammengeführt werden.

Bei dem Verfahren zum Detektieren einer Leckage im Bereich der Kühlvorrichtung 2 des Ofens 1, wobei im Falle einer Leckage flüssiges Kühlmittel 20 aus der Kühlvorrichtung 2 in den Ofenraum 1a des Ofens 1 gelangt, und wobei aus dem Ofenraum 1a über einen Zeitraum Z kontinuierlich ein Abgasstrom 30 abgeführt wird, werden folgende Schritte durchgeführt:
Es erfolgt ein Abtrennen des repräsentativen Teilstroms 30a vom Abgasstrom 30 kontinuierlich oder diskontinuierlich während des Zeitraums Z. Der Teilstrom 30a wird der Kondensiereinrichtung 5 zugeführt. Nun werden im Teilstrom 30a enthaltene dampfförmige Bestandteile kondensiert und der erhaltene Kondensatstroms 10 bestimmt (d.h. Kondensatvolumen pro Zeiteinheit). Nach Übermittlung des Ergebnisses an die Recheneinheit 7 wird der erhaltene Wert für den Kondensatstrom (KS) 10 dort mit einem Kondensatstrom-Grenzwert (KSG) verglichen. Liegt der Wert für den Kondensatstrom (KS) 10 unter dem Kondensatstrom-Grenzwert (KSG), d.h. KS ≤ KSG, so wird angenommen, dass keine Leckage der Kühlvorrichtung 2 vorliegt und der Einschmelzvorgang kann unverändert weitergeführt werden.

Liegt der Wert für den Kondensatstrom (KS) 10 oberhalb dem Kondensatstrom-Grenzwert (KSG), d.h. KS > KSG, so wird angenommen, dass eine Leckage der Kühlvorrichtung 2 vorliegt und es erfolgt eine Übermittlung des Signals an die Anzeigeeinheit 8, die ein optisches und/oder akustisches Warnsignal zur Anzeige der Leckage ausgibt. Nun können vom Bedienpersonal des Ofens 1 Gegenmaßnahmen eingeleitet werden, die einen weiteren Eintritt von Kühlmittel 20 in den Ofenraum 1a verhindern bzw. die Explosionsgefahr mindern. Alternativ kann dies über die Recheneinheit 7 automatisch erfolgen.

Als Gegenmaßnahme kann durch die Recheneinheit 7 optional eine Verringerung der, der Kühlvorrichtung 2 zugeführten Menge an Kühlmittel 20 erfolgen (siehe gepunktete Linie) und/oder eine Verringerung der, den Elektroden 4 über die Stromversorgungseinheit 16 zugeführten Strommenge erfolgen (siehe gestrichelte Linie) und/oder eine Verringerung der, der Brennereinheit 13 zugeführten Menge an Brennstoff 14 erfolgen und/oder eine Verringerung der den Elektroden 4 aufgegebenen Menge an Kühlmedium 21 erfolgen. Die Gegenmaßnahme(n) müssen in der Regel unverzüglich eingeleitet werden, um eine Vergrößerung der Leckage unter Zunahme der Explosionsgefahr zu verhindern.

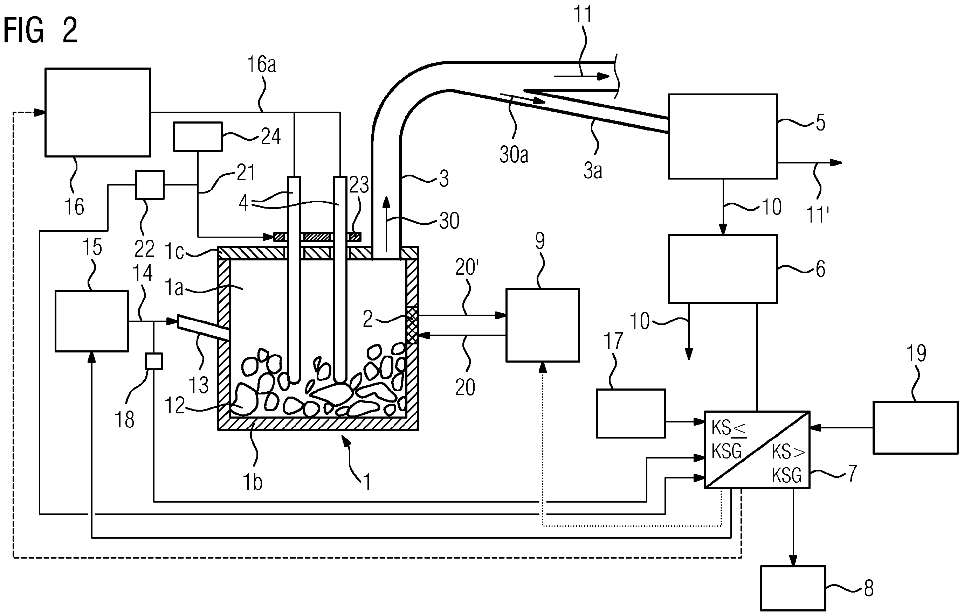

FIG 2 zeigt den Ofen 1 mit einer zweiten erfindungsgemäßen Vorrichtung. Gleiche Bezugszeichen wie in FIG 1 bezeichnen gleiche Elemente. Die Oberfläche der Elektroden 4 wird hier zur Kühlung mit einem flüssigen Kühlmedium 21 in Form von Wasser beaufschlagt, das den Elektroden 4 durch eine Kühlmediumversorgungseinheit 24 zugeführt und auf deren Oberfläche über eine Kühlmediumauftragsanordnung 23 aufgegeben, z.B. allseitig aufgesprüht, wird.

Zusätzlich zu den in FIG 1 gezeigten Bestandteilen der ersten Vorrichtung weist die hier gezeigte zweite Vorrichtung folgende weiteren optionalen Elemente auf:
- eine erste Einrichtung 17 zur Messung der Umgebungsluftfeuchte, welche mit der mindestens einen Recheneinheit 7 datentechnisch verbunden ist;
- eine zweite Einrichtung 18 zur Erfassung des dem Ofen 1 zur Verbrennung zugeführten Volumenstroms an Brennstoff 14, welche mit der mindestens einen Recheneinheit 7 datentechnisch verbunden ist;
- eine dritte Einrichtung 19 zur Erfassung der Feuchte des im Zeitraum Z im Ofenraum 1a zu behandelnden Gutes 12, welche datentechnisch mit der mindestens einen Recheneinheit 7 verbunden ist; und
- eine vierte Einrichtung 22 zur Erfassung eines Kühlmediumaufgabestroms an flüssigem Kühlmedium 21 zur Kühlung der Elektroden 4, welche datentechnisch mit der mindestens einen Recheneinheit 7 verbunden ist.

Die Feuchte des zu behandelnden Gutes 12 wird beispielsweise über einen Feuchtesensor erfasst, der im Bereich eines Lagerplatzes für das Gut 12, beispielsweise auf einen Schrottplatz oder in einer Schrottmulde, installiert ist.

Die optionalen Messwerte für die Umgebungsluftfeuchte und/oder den Volumenstroms an Brennstoff 14 und/oder die Feuchte des zu behandelnden Gutes 12 und/oder den Kühlmediumaufgabestrom auf die Elektroden 4 werden an die Recheneinheit 7 übermittelt und auf dieser Basis der Kondensatstrom-Grenzwert permanent und automatisch korrigiert.

Der Kondensatstrom-Grenzwert KSG wird demnach in Abhängigkeit einer Umgebungsluftfeuchte und/oder eines Volumenstroms an im Ofen 1 verbrannten Brennstoff 14, in Form von Wasserstoff und/oder Kohlenwasserstoff(en), und/oder eines zur Kühlung den Elektroden 4 zugeführten Kühlmediumaufgabestroms an flüssigem Kühlmedium 21 im Zeitraum Z und/oder einer Feuchte eines im Zeitraum Z im Ofenraum 1a zu behandelnden Gutes 12 gewählt. Eine Leckage an der Kühlvorrichtung 2 lässt sich so schnell und eindeutig feststellen, da die unter normalem Ofenbetrieb vorhandenen Hauptverursacher für Wasserdampf im Abgasstrom überwacht werden und deren Einfluss auf den Gehalt an Wasserdampf im Abgas somit quantifizierbar ist.

Ein Überschuss an Wasserdampf im Abgasstrom, der zu einer Überschreitung des Kondensatstrom-Grenzwertes KSG führt, kann somit eindeutig einer Leckage an einer Kühlvorrichtung zugeordnet werden.

Bei einer hier nicht dargestellten, optionalen Erfassung des Kühlmittel-Volumenstroms durch die Kühlvorrichtung 2 und dessen Übermittlung an die Recheneinheit 7 kann unmittelbar von einer Änderung des Kühlmittel-Volumenstroms auf die Änderung des gemessenen Kondensatstroms KS und damit auf die Größe der Leckage geschlossen werden. Eine gezielte Änderung des Kühlmittel-Volumenstroms kann somit bei einem Verdacht auf ein Vorliegen einer Leckage erfolgen, um das aktuelle Ausmaß der Leckage festzustellen.

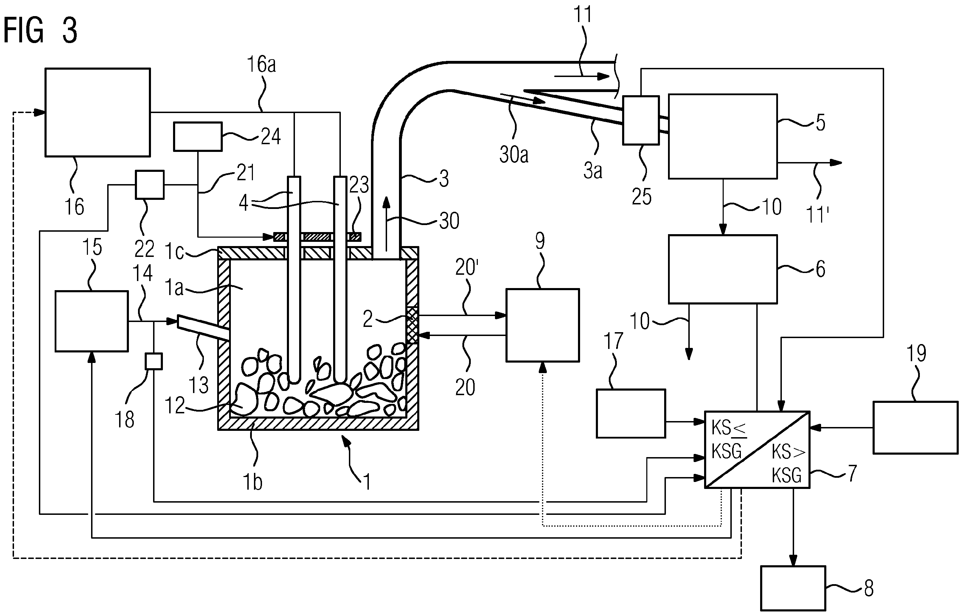

FIG 3 zeigt den Ofen 1 mit einer zweiten erfindungsgemäßen Vorrichtung gemäß FIG 2 und einer zusätzlichen Abgasanalyseeinheit 25. Gleiche Bezugszeichen wie in FIG 2 bezeichnen gleiche Elemente. Die Abgasanalyseeinheit 25 ist zwischen der Teilstrom-Abführleitung 3a und der Kondensiereinrichtung 5 angeordnet und dient zur Ermittlung beispielsweise des Kohlendioxidgehaltes, des Kohlenmonoxidgehaltes, des Wasserstoffgehaltes, des Sauerstoffgehaltes, des Stickoxid-Gehaltes usw. des Teilstroms 30a des Abgasstroms 30. So kann insbesondere in Kenntnis des Wasserstoffgehaltes des Teilstroms 30a und somit des Abgasstroms 30 eine zusätzliche Korrektur des Kondensatstrom-Grenzwerts KSG erfolgen, da die vorhandene Menge an Wasserstoff, umgerechnet in die sich daraus theoretisch ergebende Wassermenge, dem im Abgasstrom vorhandenen Wasserdampf hinzugerechnet werden muss.

Es ergibt sich ein sehr schnelles und zuverlässiges Verfahren, eine Leckage im Bereich einer oder mehrerer Kühlvorrichtungen eines Ofens zu detektieren.

Die in den FIGen 1 bis 3 dargestellten Öfen, Vorrichtungen und Verfahren stellen lediglich Beispiele dar. So kann die erfindungsgemäße Vorrichtung auch an anderen Typen von Öfen als den hier gezeigten Elektrolichtbogenöfen eingesetzt werden, bei denen Kühlvorrichtungen in direktem Kontakt zum Ofenraum angeordnet sind.

## Patentansprüche

1. Verfahren zum Detektieren einer Leckage im Bereich mindestens einer Kühlvorrichtung (2) eines Ofens (1), wobei im Falle einer Leckage flüssiges Kühlmittel (20) aus der mindestens einen Kühlvorrichtung (2) in einen Ofenraum (1a) des Ofens (1) gelangt, und wobei aus dem Ofenraum (1a) über einen Zeitraum Z kontinuierlich ein Abgasstrom (30) abgeführt wird, mit folgenden Schritten:
- Abtrennen eines repräsentativen Teilstroms (30a) vom Abgasstrom (30) während des Zeitraums Z;
- Kondensieren von im Teilstrom (30a) enthaltenen dampfförmigen Bestandteilen und Bestimmen eines erhaltenen Kondensatstroms (10);
- Vergleichen des erhaltenen Kondensatstroms (10) mit einem Kondensatstrom-Grenzwert, und
- Anzeige einer Leckage, wenn der Kondensatstrom (10) den Kondensatstrom-Grenzwert überschreitet.

2. Verfahren nach Anspruch 1,
wobei der Kondensatstrom-Grenzwert in Abhängigkeit einer Umgebungsluftfeuchte und/oder eines Volumenstroms an im Ofen (1) verbrannten Brennstoff (14) in Form von Wasserstoff und/oder Kohlenwasserstoff(en) gewählt wird.

3. Verfahren nach Anspruch 1 oder Anspruch 2,
wobei der Ofen (1) ein Elektrolichtbogenofen ist, in dessen Ofenraum (1a) mindestens eine Elektrode (4) geführt ist, deren Oberfläche zur Kühlung mit einem flüssigen Kühlmedium (21) beaufschlagt wird, und wobei der Kondensatstrom-Grenzwert in Abhängigkeit eines zur Kühlung der mindestens einen Elektrode (4) zugeführten Kühlmediumaufgabestroms an flüssigem Kühlmedium (21) im Zeitraum Z gewählt wird.

4. Verfahren nach einem der Ansprüche 1 bis 3,
wobei das Kühlmittel (20) und/oder das Kühlmedium (21) durch Wasser gebildet wird.

5. Verfahren nach einem der Ansprüche 1 bis 4,
wobei der Kondensatstrom-Grenzwert in Abhängigkeit einer Feuchte eines im Zeitraum Z im Ofenraum (1a) zu behandelnden Gutes (12) gewählt wird.

6. Verfahren nach einem der Ansprüche 1 bis 5,
wobei eine Leckage in der mindestens einen Kühlvorrichtung (2) über ein akustisches und/oder optisches Warnsignal angezeigt wird.

7. Vorrichtung zur Durchführung eines Verfahrens nach einem der Ansprüche 1 bis 6, umfassend
- mindestens eine Kondensiereinrichtung (5) zum Kondensieren von im Teilstrom (30a) enthaltenen dampfförmigen Bestandteilen;
- mindestens eine Messeinrichtung (6) zum Bestimmen des erhaltenen Kondensatstroms (10);
- mindestens eine Recheneinheit (7) zum Vergleichen des erhaltenen Kondensatstroms (10) mit einem Kondensatstrom-Grenzwert, und
- mindestens eine Anzeigeeinheit (8) zur Anzeige einer Leckage, sobald der Kondensatstrom (10) den Kondensatstrom-Grenzwert überschreitet.

8. Vorrichtung nach Anspruch 7,
umfassend weiterhin mindestens eine erste Einrichtung (17) zur Messung der Umgebungsluftfeuchte, welche mit der mindestens einen Recheneinheit (7) datentechnisch verbunden ist.

9. Vorrichtung nach Anspruch 7 oder Anspruch 8,
umfassend weiterhin mindestens eine zweite Einrichtung (18) zur Erfassung des dem Ofen (1) zur Verbrennung zugeführten Volumenstroms an Brennstoff (14), welche mit der mindestens einen Recheneinheit (7) datentechnisch verbunden ist.

10. Vorrichtung nach einem der Ansprüche 7 bis 9,
umfassend weiterhin mindestens eine dritte Einrichtung (19) zur Erfassung der Feuchte des im Zeitraum Z im Ofenraum (1a) zu behandelnden Gutes (12), welche datentechnisch mit der mindestens einen Recheneinheit (7) verbunden ist.

11. Vorrichtung nach einem der Ansprüche 7 bis 10,
umfassend weiterhin mindestens eine vierte Einrichtung (22) zur Erfassung eines Kühlmediumaufgabestroms an flüssigem Kühlmedium (21) zur Kühlung der mindestens einen Elektrode (4) im Zeitraum Z, welche datentechnisch mit der mindestens einen Recheneinheit (7) verbunden ist.

12. Ofen (1), insbesondere Elektrolichtbogenofen, mit einem Ofenraum (1a), mindestens einer Kühlvorrichtung (2), die in Kontakt zum Ofenraum (1a) angeordnet ist, mindestens eine Abgasabführleitung (3) zur Abführung eines Abgasstroms (30) aus dem Ofenraum (1a), mindestens eine von der Abgasabführleitung (3) abzweigende Teilstrom-Abführleitung (3a), sowie mindestens eine Vorrichtung nach einem der Ansprüche 7 bis 11, deren mindestens eine Kondensiereinrichtung (5) mit der Teilstrom-Abführleitung (3a) verbunden ist.

13. Ofen nach Anspruch 12,
umfassend ein Ofengefäß (1b) und einen Ofendeckel (1c), die den Ofenraum (1a) ausbilden, sowie mindestens eine in den Ofenraum (1a) einbringbare Elektrode (4).

14. Ofen nach Anspruch 13,
umfassend je Elektrode (4) mindestens eine Kühlmediumauftragsanordnung (23) zur Beaufschlagung einer Oberfläche der Elektrode (4) mit flüssigem Kühlmedium (21).

## Claims

1. Method for detecting a leakage in the area at least one cooling device (2) of a furnace (1), wherein in the event of leakage, liquid coolant (20) from the at least one cooling device (2) enters a furnace chamber (1a) of the furnace (1) and wherein a stream of exhaust gas (30) is continuously removed from the furnace chamber (1a) over a period of time Z, comprising the following steps:
- dividing off a representative partial stream (30a) from the stream of exhaust gas (30) during the period of time Z;
- condensing vaporous constituents contained in the partial stream (30a) and determining a stream of condensate (10) obtained;
- comparing the stream of condensate (10) obtained with a condensate-stream limit value and
- indicating a leakage if the stream of condensate (10) exceeds the condensate-stream limit value.

2. Method according to claim 1,
wherein the condensate-stream limit value is selected in dependence on an atmospheric moisture and/or a volumetric flow rate of fuel (14) burned in the furnace (1) in the form of hydrogen and/or hydrocarbon(s).

3. Method according to claim 1 or claim 2,
wherein the furnace (1) is an electric arc furnace into the furnace chamber (1a) of which at least one electrode (4) is guided, wherein a liquid cooling medium (21) is applied to the surface thereof for cooling and wherein the condensate-stream limit value is selected in dependence on a cooling medium feed stream of liquid cooling medium (21) supplied for cooling the at least one electrode (4) in the period of time Z.

4. Method according to one of claims 1 to 3,
wherein the coolant (20) and/or the cooling medium (21) is/are formed from water.

5. Method according to one of claims 1 to 4,
wherein the condensate-stream limit value is selected in dependence on a moisture of a material (12) to be treated in the furnace chamber (1a) in the period of time Z.

6. Method according to one of claims 1 to 5,
wherein a leakage in the at least one cooling device (2) is displayed via an acoustic and/or optical warning signal.

7. Device for carrying out of a method according to any one of claims 1 to 6, comprising
- at least one condensing mechanism (5) for condensing vaporous constituents contained in the partial stream (30a);
- at least one measuring mechanism (6) for determining the stream of condensate (10) obtained;
- at least one arithmetic logic unit (7) for comparing the stream of condensate (10) obtained with a condensate-stream limit value and
- at least one display unit (8) for indicating a leakage as soon as the stream of condensate (10) exceeds the condensate-stream limit value.

8. Device according to claim 7,
further comprising at least one first mechanism (17) for measuring the atmospheric moisture, which is connected to the at least one arithmetic logic unit (7) by a data link.

9. Device according to claim 7 or claim 8,
further comprising at least one second mechanism (18) for detecting the volumetric flow rate of fuel (14) supplied to the furnace (1) for combustion, which is connected to the at least one arithmetic logic unit (7) by a data link.

10. Device according to one of claims 7 to 9,
further comprising at least one third mechanism (19) for detecting the moisture of the material (12) to be treated in the furnace chamber (1a) in the period of time Z, which is connected to the at least one arithmetic logic unit (7) by a data link.

11. Device according to one of claims 7 to 10,
further comprising at least one fourth mechanism (22) for detecting a cooling medium feed stream of liquid cooling medium (21) for cooling the at least one electrode (4) in the period of time Z, which is connected to the at least one arithmetic logic unit (7) by a data link.

12. Furnace (1), in particular an electric arc furnace, with a furnace chamber (1a), at least one cooling device (2), which is arranged in contact with the furnace chamber (1a), at least one exhaust gas removal line (3) for removing a stream of exhaust gas (30) from the furnace chamber (1a), at least one partial-stream removal line (3a) branching off from the exhaust gas removal line (3) and at least one device according to one of claims 7 to 11, the at least one condensing mechanism (5) of which is connected to the partial stream removal line (3a).

13. Furnace according to claim 12,
comprising a furnace vessel (1b) and a furnace cover (1c), which form the furnace chamber (1a), and at least one electrode (4) that can be introduced into the furnace chamber (1a).

14. Furnace according to claim 13,
comprising for each electrode (4) at least one cooling-medium application arrangement (23) for applying a liquid cooling medium (21) to a surface of the electrode (4).

## Revendications

1. Procédé de détection d'une fuite dans la zone d'au moins un dispositif de refroidissement (2) d'un four (1), du réfrigérant liquide (20), en cas d'une fuite, arrivant dans une enceinte de four (la) du four (1) à partir de l'au moins un dispositif de refroidissement (2), et un flux de gaz d'échappement (30) étant évacué de manière continue hors de l'enceinte de four (1a) pendant une période de temps Z, comprenant les étapes suivantes :
- séparation d'un flux partiel (30a) représentatif du flux de gaz d'échappement (30) pendant la période de temps Z ;
- condensation de parties constituantes sous forme de vapeur contenues dans le flux partiel (30a) et détermination d'un flux de condensat (10) obtenu ;
- comparaison du flux de condensat (10) obtenu avec une valeur limite de flux de condensat, et
- indication d'une fuite lorsque le flux de condensat (10) dépasse la valeur limite de flux de condensat.

2. Procédé selon la revendication 1,
la valeur limite de flux de condensat étant sélectionnée en fonction d'une humidité de l'air ambiant et/ou d'un débit volumique de combustible (14) brûlé dans le four (1) sous forme d'hydrogène et/ou d'hydrocarbure(s).

3. Procédé selon la revendication 1 ou la revendication 2,
le four (1) étant un four à arc électrique dans l'enceinte de four (1a) duquel est guidée au moins une électrode (4) dont la surface est alimentée avec un agent de refroidissement (21) liquide destiné à refroidir, et la valeur limite de flux de condensat étant sélectionnée en fonction d'un flux d'alimentation en agent de refroidissement (21) liquide amené pour le refroidissement de l'au moins une électrode (4) pendant la période de temps Z.

4. Procédé selon l'une quelconque des revendications 1 à 3,
le réfrigérant liquide (20) et/ou l'agent de refroidissement (21) étant formés par de l'eau.

5. Procédé selon l'une quelconque des revendications 1 à 4,
la valeur limite de flux de condensat étant sélectionnée en fonction d'une humidité d'un produit (12) à traiter dans l'enceinte de four (1a) pendant la période de temps Z.

6. Procédé selon l'une quelconque des revendications 1 à 5,
une fuite dans l'au moins un dispositif de refroidissement (2) étant indiquée par un signal d'avertissement acoustique et/ou optique.

7. Dispositif destiné à la réalisation d'un procédé selon l'une quelconque des revendications 1 à 6, comprenant
- au moins un dispositif de condensation (5) pour la condensation de parties constituantes sous forme de vapeur contenues dans le flux partiel (30a) ;
- au moins un dispositif de mesure (6) destiné à déterminer le flux de condensat (10) obtenu ;
- au moins une unité de calcul (7) destinée à comparer le flux de condensat (10) obtenu avec une valeur limite de flux de condensat, et
- au moins une unité d'affichage (8) destinée à indiquer une fuite dès que le flux de condensat (10) dépasse la valeur limite de flux de condensat.

8. Dispositif selon la revendication 7,
comprenant en outre au moins une première installation (17) destinée à mesurer l'humidité de l'air ambiant, laquelle est reliée à l'au moins une unité de calcul (7) au niveau des données.

9. Dispositif selon la revendication 7 ou la revendication 8, comprenant en outre au moins une deuxième installation (18) destinée à détecter le débit volumique de combustible (14) amené au four (1) pour la combustion, laquelle installation est reliée à l'au moins une unité de calcul (7) au niveau des données.

10. Dispositif selon l'une quelconque des revendications 7 à 9, comprenant en outre au moins une troisième installation (19) destinée à détecter l'humidité du produit (12) à traiter dans l'enceinte de four (1a) pendant la période de temps Z, laquelle installation est reliée à l'au moins une unité de calcul (7) au niveau des données.

11. Dispositif selon l'une quelconque des revendications 7 à 10, comprenant en outre au moins une quatrième installation (22) destinée à détecter un flux d'alimentation en agent de refroidissement (21) liquide pour le refroidissement de l'au moins une électrode (4) pendant la période de temps Z, laquelle installation est reliée à l'au moins une unité de calcul (7) au niveau des données.

12. Four (1), notamment four à arc électrique, comprenant une enceinte de four (1a), au moins un dispositif de refroidissement (2) qui est disposé en contact avec l'enceinte de four (1a), au moins une conduite d'évacuation de gaz d'échappement (3) destinée à évacuer un flux de gaz d'échappement (30) hors de l'enceinte de four (1a), au moins une conduite d'évacuation de flux partiel (3a) bifurquant de la conduite d'évacuation de gaz d'échappement (3), ainsi qu'au moins un dispositif selon l'une quelconque des revendications 7 à 11, dont l'au moins un dispositif de condensation (5) est relié à la conduite d'évacuation de flux partiel (3a).

13. Four selon la revendication 12,
comprenant un récipient de four (1b) et un couvercle de four (1c), lesquels forment l'enceinte de four (1a), ainsi qu'au moins une électrode (4) pouvant être placée dans l'enceinte de four (1a).

14. Four selon la revendication 13,
comprenant respectivement une électrode (4), au moins un agencement d'alimentation en agent de refroidissement (23) destiné à alimenter une surface de l'électrode (4) avec l'agent de refroidissement (21) liquide.
